# EUROPÄISCHE PATENTSCHRIFT

(11) **EP 2 678 482 B1**
(45) Veröffentlichungstag und Bekanntmachung des Hinweises auf die Patenterteilung: **19.11.2014**
(21) Anmeldenummer: 12705059.9
(22) Anmeldetag: 15.02.2012
(51) Int. Cl.: E03D 5/00, E03F 1/00, E03D 5/02, E03B 1/04, F16K 31/126, B64D 11/02

(54) **ABWASSERANLAGE, VENTIL UND VERFAHREN ZUR GRAUWASSERDRAINAGE FÜR EIN VERKEHRSFLUGZEUG**
WASTE WATER SYSTEM, VALVE AND METHOD FOR GREY WATER DRAINAGE FOR A COMMERCIAL AIRCRAFT
INSTALLATION D'ÉVACUATION, SOUPAPE ET PROCÉDÉ DE DRAINAGE DES EAUX GRISES POUR UN AVION DE LIGNE

(30) Priorität: 22.02.2011 DE 102011012047
(43) Veröffentlichungstag der Anmeldung: 01.01.2014
(73) Patentinhaber: Lufthansa Technik AG, 22335 Hamburg (DE)
(72) Erfinder: MAIER-WITT, Joachim, 22605 Hamburg (DE)
(74) Vertreter: Müller Verweyen
(86) Internationale Anmeldenummer: PCT/EP2012/000658
(87) Internationale Veröffentlichungsnummer: WO 2012/113521

(56) Entgegenhaltungen:
- EP-A1- 0 297 260
- WO-A1-2007/002119
- US-A- 5 429 149
- US-A1- 2004 244 839

## Beschreibung

Die Erfindung betrifft eine Abwasseranlage für ein Verkehrsflugzeug gemäß dem Oberbegriff des Anspruchs 1. Die Erfindung betrifft weiterhin ein Ventil zum Einsatz in einem Abwassersystem eines Verkehrsflugzeugs gemäß dem Oberbegriff des Anspruchs 8. Die Erfindung betrifft außerdem ein entsprechendes Verfahren zur Drainage von Grauwasser in einem Verkehrsflugzeug dem Oberbegriff des Anspruchs 13.

In Verkehrsflugzeugen fällt in diversen Einrichtungen, wie beispielsweise Küchen, Waschbecken und seit einiger Zeit auch in Duschen, Grauwasser an. Dieses Grauwasser wird über die bordeigene Abwasseranlage entweder aus rumpfseitigen Grauwasserauslässen, sog. ,Drain Masts', an die Umgebung abgegeben, oder in das bordeigene Vakuumsystem eingeleitet. Zur Drainage wird im Flug der Unterdruck zwischen Kabinen- und Umgebungsdruck genutzt, allerdings ist naturgemäß dieser Unterdruck bei Flugzeugen, die sich am Boden befinden, nicht gegeben. Zur Drainage am Boden ist daher ein Gebläse vorgesehen, das den nötigen Unterdruck erzeugt und das Grauwasser in das bordeigene Vakuumsystem einleitet, siehe z.B. Dokument WO 2007/002119.

Im Stand der Technik finden sich verschiedene Abwassersysteme. Beispielsweise ist es aus der EP 0 295 508 A1 bekannt, das Grauwasser von Waschbecken für Toiletten nutzbar zu machen.

Des Weiteren sind für den Abfluss in Flugzeugen aus der US 5,429,149 selbsttätig öffnende Ventile bekannt.

Neben Grauwassersystemen sind im Stand der Technik, beispielweise aus den Druckschriften US 4,332,041, DE 10 2208 058 015 A1 und US 5,007,117, Abwassersysteme für Toilettenabwasser bekannt. Ein großer wesentlicher Unterschied von Grauwassersystemen zu Toilettenabwassersystemen besteht darin, dass das Ablassen von Grauwasser aus Grauwasserauslässen, den, Drain Masts', zulässig ist, dies jedoch für Toilettensysteme nicht in Frage kommt. Dadurch bedingen sich unterschiedliche Gestaltungsmöglichkeiten dieser Abwassersysteme.

Dokument WO 2007/002119 entspricht dem Oberbegriff der Ansprüche 1, 8 und 13. Es wird als nächstliegender Stand der Technik gegenüber dem Gegenstand dieser Ansprüche angesehen.

Das Grauwasser von Duschen, wie sie beispielsweise in VIP-Flugzeugen eingesetzt werden, wird zunächst in einer Kammer unmittelbar unterhalb der Dusche gesammelt, um dann in Teilvolumina ins jeweilige Abwassersystem abgeführt zu werden. Zu diesem Zweck sind neben dieser Kammer ein Ventil sowie eine elektronische Steuerung notwendig, welche unter Zuhilfenahme von zwei Füllstandssensoren, die in der Kammer angeordnet sind, das Ventil öffnet bzw. bei Bedarf zusätzlich ein Gebläse ansteuert, welches das Grauwasser aus der Kammer absaugen kann. Die Kammer, das Ventil und das elektronisch gesteuerte Gebläse sind insbesondere dann nötig, wenn eine Drainage nicht im Fluge, sondern am Boden erfolgen soll.

Die Kosten der benötigten Vorrichtungen sind hoch und die elektronische Steuerung kann nicht ohne erheblichen Aufwand von einem bereits im Flugzeug vorhandenen Controller, der z.B. die gesamte Flugzeugwasseranlage steuert, übernommen werden.

Der Erfindung liegt demzufolge die Aufgabe zugrunde, insbesondere eine Abwasseranlage und ein Verfahren zur Drainage von Grauwasser in einem Verkehrsflugzeug bereitzustellen, welche weniger aufwendig und insbesondere wirtschaftlicher ist.

Die Erfindung löst diese Aufgabe mit den Merkmalen der unabhängigen Ansprüche. Weitere bevorzugte Ausführungsformen der Erfindung sind den Unteransprüchen und den zugehörigen Beschreibungen und Zeichnungen zu entnehmen.

Zur Lösung der Erfindung wird erfindungsgemäß eine Abwasseranlage für ein Verkehrsflugzeug mit einer Abwasserleitung und einem in der Abwasserleitung angeordneten Ventil vorgeschlagen, wobei das Grauwasser bei einer Drainage nach Durchfließen des Ventils entweder zur Abgabe aus einem flugzeugrumpfseitig angebrachten Auslassstutzen weitergeleitet wird oder durch ein Gebläse in ein bordeigenes Vakuumsystem eingeleitet wird, wobei das Ventil einen Endlagenschalter aufweist, welcher dazu vorgesehen ist, bei geöffnetem Ventil ein Steuersignal für das Gebläse zu senden.

Durch ein solches Ventil mit Endlagenschalter kann die Abwasseranlage vereinfacht werden, da das Gebläse automatisch bei geöffnetem Ventil gestartet werden kann und eine Einleitung von Grauwasser in das bordeigene Vakuumsystem somit automatisch erfolgen kann.

Das Grauwasser wird bei einer Drainage nach Durchfließen des Ventils entweder zur Abgabe aus einem flugzeugrumpfseitig angebrachten Auslassstutzen weitergeleitet oder durch ein Gebläse in ein bordeigenes Vakuumsystem eingeleitet. Eine erfindungsgemäße Abwasseranlage ist bevorzugt derart eingerichtet, dass beide Möglichkeiten der Weiterleitung kumulativ vorliegen. In einer weiteren Ausführungsform der Erfindung kann auch nur eine Möglichkeit der Weiterleitung vorliegen.

Vorzugsweise wird das Gebläse durch das ausgesendete Steuersignal nur gestartet, wenn sich das Flugzeug am Boden befindet. Insbesondere für diesen Fall, wenn das Flugzeug am Boden ist, kann die Grauwasserdrainage so vereinfacht werden. Bei einer Grauwasserdrainage während des Fluges wird der nötige Unterdruck durch den Druckunterschied zwischen Kabinen- und Umgebungsdruck genutzt, um das Grauwasser zum flugzeugrumpfseitig angebrachten Auslassstutzen zu leiten.

Vorzugsweise öffnet das Ventil bei einem bestimmten hydrostatischen Druck selbsttätig. Durch ein selbsttätig öffnendes Ventil kann insbesondere auf üblicherweise verwendete Füllstandssensoren verzichtet werden, da bei einem bestimmten vordefinierten hydrostatischen Druck die Grauwasserdrainage automatisch eingeleitet wird. Dadurch kann die Abwasseranlage noch einfacher gestaltet werden und ist dementsprechend auch wirtschaftlicher. Dabei ist es bevorzugt, wenn das Ventil so eingerichtet ist, dass durch das selbsttätige Öffnen des Ventils der Endlagenschalter ausgelöst wird. Vorzugsweise unterbricht die Bewegung eines Teils des Ventils, beispielsweise des Ventilkolbens, oder eines mit dem Ventilkolben verbundenen Zwischenelementes, einen elektrischen Kontakt oder stellt einen solchen her, wodurch ein Signal an das Gebläse ausgesendet wird.

Vorzugsweise weist das Ventil eine Membran und ein auf die Membran wirkendes Federelement auf, wobei eine Zunahme des auf das Ventil wirkenden hydrostatischen Wasserdrucks über einen Schwellwert eine Verschiebung der Membran entgegen der Federkraft des Federelements bewirkt und das Ventil öffnet. Durch einen derartigen Aufbau des Ventils kann das automatische Öffnen mit einfachen Mitteln zuverlässig gewährleistet werden.

Vorzugsweise ist an der Membran ein Kolben angeordnet, der durch die Verschiebebewegung der Membran aus einer das Ventil verschließenden Verschlussstellung in eine das Ventil freigebenden Öffnungsstellung bewegbar ist. Der Kolben kann dabei in einfacher Weise an den Ventilausgang angepasst werden, so dass er diesen besonders gut abdichtet, er dient gleichzeitig aber auch als Gegengewicht zur Wassersäule, so dass vorzugsweise auch über die Gestaltung des Kolbens der Schwellwert, bei dem das Ventil öffnet, mitbestimmt werden kann.

Vorzugsweise weist das Ventil einen Aktuator auf, der zum gesteuerten Öffnen des Ventils vorgesehen ist. Durch einen zusätzlichen Aktuator kann das Ventil auch bei niedrigem Wasserdruck geöffnet werden, so dass die Abwasseranlage oder beispielsweise auch nur ein Waschbeckenabfluss komplett drainiert werden. Eine solche Drainage ist beispielsweise dann nötig, wenn das Flugzeug für längere Zeit in eine Parkstellung bewegt wird. In vielen Abwasserleitungen steht eine kleine Wassersäule, um beispielsweise als Luft- und/oder Geruchsbarriere zu wirken. Auch dieses Wasser muss jedoch drainiert werden, was durch das Vorsehen eines Aktuators in den verwendeten Ventilen flugzeugweit automatisch auf Knopfdruck geschehen kann und nicht manuell an jedem Abfluss einzeln durchgeführt werden muss. Vorzugsweise ist der Aktuator dazu als elektrischer Antrieb ausgeführt.

Vorzugsweise ist in einem Abschnitt der Abwasserleitung vor dem Ventil ein Ausgleichsbehälter vorgesehen. Vor dem Ventil meint dabei entgegen der Strömungsrichtung aufwärts vor dem Ventil. Durch den Ausgleichsbehälter können die Schaltintervalle des Ventils verlängert werden. Prinzipiell reicht zwar zum Aufbau eines hydrostatischen Drucks eine senkrecht verlaufende Zuleitung aus, jedoch kann das Volumen dabei so klein sein, dass sich eine hohe Öffnungsfrequenz und damit Schaltfrequenz des Gebläses ergeben könnte. Daher ist es bevorzugt, einen Teil der Abwasserleitung vor dem Ventil in Form eines Vorlagebehälters auszugestalten. So wird vermieden, dass das Gebläse in kurzen Abständen eingeschaltet und ausgeschaltet wird. Es muss sich erst ein gewisses Wasservolumen im Ausgleichsbehälter ansammeln, bevor das Gebläse in Betrieb genommen wird. Der Vorlagebehälter ist dementsprechend nicht nur ein Wasserspeicher, sondern übt zusätzlich eine dämpfende bzw. regelnde Funktion auf die Schaltungsintervalle des Gebläses aus.

Zur Lösung der Erfindung wird des Weiteren ein Verfahren zum Drainieren von Grauwasser in einer Abwasseranlage eines Verkehrsflugzeugs vorgeschlagen, bei dem das anfallende Grauwasser nach Durchfließen eines Ventils entweder zur Abgabe aus einem flugzeugrumpfseitig angebrachten Auslassstutzen weitergeleitet wird oder durch ein Gebläse in ein bordeigenes Vakuumsystem eingeleitet wird und wobei das Gebläse durch einen Endlagenschalter des Ventils, der bei geöffnetem Ventil ein Steuersignal an das Gebläse sendet, automatisch gestartet wird, wenn sich das Flugzeug am Boden befindet.

Vorzugsweise wird dabei außerdem das Grauwasser während des Fluges automatisch durch ein bei einem bestimmten hydrostatischen Druck selbsttätig öffnendes Ventil zur Abgabe aus dem flugzeugrumpfseitig angebrachten Auslassstutzen weitergeleitet.

Dementsprechend wird vorzugsweise die Information, ob das Flugzeug sich im Flug oder am Boden befindet, bei der Drainage des Grauwassers berücksichtigt. Bei der Drainage kann das Grauwasser in einfacher Weise automatisiert in das bordeigene Vakuumsystem oder zur Abgabe aus dem flugzeugrumpfseitig angebrachten Auslassstutzen weitergeleitet werden.

Die Erfindung wird im Folgenden anhand bevorzugter Ausführungsformen unter Bezugnahme auf die beigefügten Figuren erläutert. Dabei zeigt:
- Fig. 1:: Aufbau einer Abwasseranlage eines Verkehrsflugzeuges nach dem Stand der Technik
- Fig. 2:: Ein erfindungsgemäßes Ventil zum Einsatz in einem Abwassersystem eines Verkehrsflugzeuges
- Fig. 3:: Aufbau einer erfindungsgemäßen Abwasseranlage eines Verkehrsflugzeuges
- Fig. 4:: Waschbecken mit erfindungsgemäßem Ventil

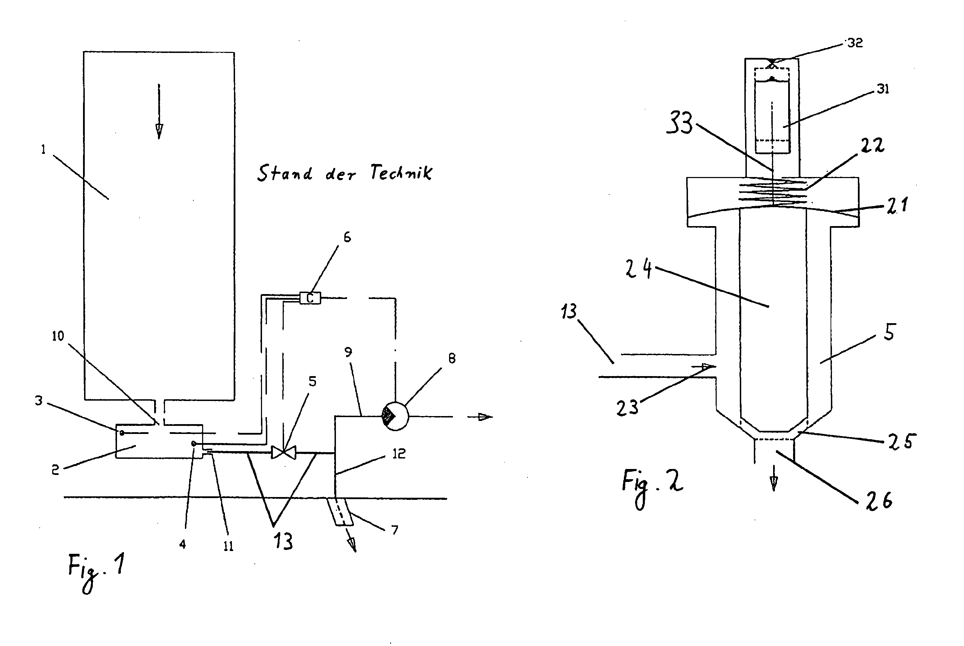

Die Figur 1 zeigt den Aufbau einer Abwasseranlage, wie sie typischerweise in VIP-Flugzeugen zur Grauwasserdrainage einer Duschkabine 1 eingesetzt wird. Anfallendes Grauwasser in der Duschkabine 1 wird zunächst in einer Kammer 2 unmittelbar unterhalb der Duschkabine 1 gesammelt, um dann in Teilvolumina entweder zur Abgabe aus einem flugzeugrumpfseitig angebrachten Auslassstutzen 7 weitergeleitet zu werden oder in das bordeigene Vakuumsystem 9 eingeleitet zu werden. Zu diesem Zweck ist neben der Kammer 2 in der Abwasserleitung 13 ein Ventil 5 sowie eine elektronische Steuerung 6 notwendig. Unter Grauwasser ist dabei das Abwasser aus Handwaschbecken, Duschen oder ähnlichem zu verstehen. Bei dem Abwasser aus Toiletten handelt es sich nicht um Grauwasser. Die Kammer 2 verfügt über einen oberen und einen unteren Füllstandssensor 3,4. Wird der obere Füllstandssensor 3 vom Grauwasser erreicht, wird das Ventil 5 von der Steuerung 6 geöffnet und das Grauwasser kann aus der Kammer 2 über den am Flugzeugrumpf montierten Auslassstutzen 7 (auch "Drain Mast" genannt) in die Umgebung abfließen. Soll dies - z.B. wenn das Flugzeug sich am Boden befindet - verhindert werden, wird das Grauwasser in das bordeigene Vakuumsystem 9 eingeleitet. Dazu muss der notwendige Unterdruck, der im Flug durch die Differenz aus Kabinen- und Umgebungsdruck entsteht, durch ein im Flugzeug installiertes Gebläse 8 hergestellt werden. Dieses Gebläse wird ebenfalls durch den oberen Füllstandssensor 3 der Kammer 2 und der elektronischen Steuerung 6 gestartet und saugt das Grauwasser ab. Erreicht das ablaufende Grauwasser in der Kammer 2 den unteren Füllstandssensor 4, wird das Ventil 5 geschlossen und ggf. das Gebläse 8 wieder abgestellt. Nach diesem Absaugvorgang verbleibt eine gewisse Menge an Grauwasser in der Kammer 2, damit kein Luftstrom zwischen dem Grauwassereinlauf 10 und dem Grauwasserauslass 11 entstehen kann, der zu hörbaren Sauggeräuschen in der Duschkabine führen würde. Das Sammeln von Grauwasser in der Kammer 2 und die portionsweise Abgabe desselben sorgen darüber hinaus dafür, dass das Gebläse 8 nicht ununterbrochen betrieben werden muss. Wird die beschriebene Kammer 2 im Flug benutzt, wird das Grauwasser nicht ins Vakuumsystem 9, sondern über das Grauwasserleitungssystem 12 aus dem Flugzeug geleitet. Die Funktion von Kammer 2, Ventil 5 und Steuerung 6 reduzieren sich in diesem Fall auf die Vermeidung von Sauggeräuschen.

Die Anzahl und Kosten der verwendeten Geräte, insbesondere der Kammer 2, dem Ventil 5 und der elektronischen Regelung 6 sind hoch. Die Regelung 6 ist für den Betrieb der Kammer 2 notwendig, seine Funktion kann nicht ohne erheblichen Aufwand von einer ggf. ebenfalls vorhandenen elektronischen Steuerung, die z.B. die gesamte Flugzeugwasseranlage steuert, übernommen werden. Der Einbau der Kammer 2 unmittelbar unter der Dusche erfordert Bauraum, so dass der Zutritt zur Duschkabine 1 stets erhöht ist.

Diese Probleme werden gelöst, indem das Ventil 5 der Abwasseranlage aus Figur 1 besonders ausgestaltet ist. Dieses erfindungsgemäße Ventil 5 zum Einsatz in einer Abwasseranlage bzw. eines Abwassersystems eines Verkehrsflugzeugs, ist in der Figur 2 dargestellt. Vorzugsweise öffnet das Ventil 5 bei einem bestimmten hydrostatischen Druck selbsttätig und weist einen Endlagenschalter 32 zur Detektion eines Öffnungszustandes des Ventils 5 auf.

Die Abwasserleitung 13 leitet Grauwasser durch einen Ventileingang 23 in das Gehäuse des Ventils 5 ein. Das Ventil 5 weist neben dem Ventileingang 23 auch einen Ventilausgang 26 auf sowie einen in dem Gehäuse angeordneten Kolben 24, wobei der Kolben 24 in dem Gehäuse verschiebbar angeordnet ist und mit einer Membran 21 verbunden ist. Die Membran 21 ist über ein Federelement 22, welches sich mit seiner nicht der Membran 21 zugeordneten Seite am Gehäuse abstützt, mit einer Federkraft beaufschlagt, und bei einer Zunahme des auf das Ventil 5 wirkenden Wasserdrucks über einen Schwellwert hinaus, verschiebt sich die Membran 21 entgegen der Federkraft des Federelements 22. Dies hat zur Folge, dass das Ventil 5 sich öffnet und das Grauwasser aus dem Ventilausgang 26 strömen kann.

Der Wasserdruck ist dabei typischerweise der hydrostatische Druck der Wassersäule in der Abwasserleitung 13 bzw. der vorherrschende Druck in der Abwasserleitung 13. Der Kolben 24 wird beim Öffnen des Ventils 5 durch die Verschiebebewegung der Membran 21 aus einer das Ventil 5 verschließenden Verschlussstellung, bei der der Kolben 24 im Ventilsitz 25 sitzt, in eine das Ventil 5 freigebenden Öffnungsstellung bewegt. Erfindungsgemäß weist das Ventil 5 einen Endlagenschalter 32 und einen Aktuator 31 auf.

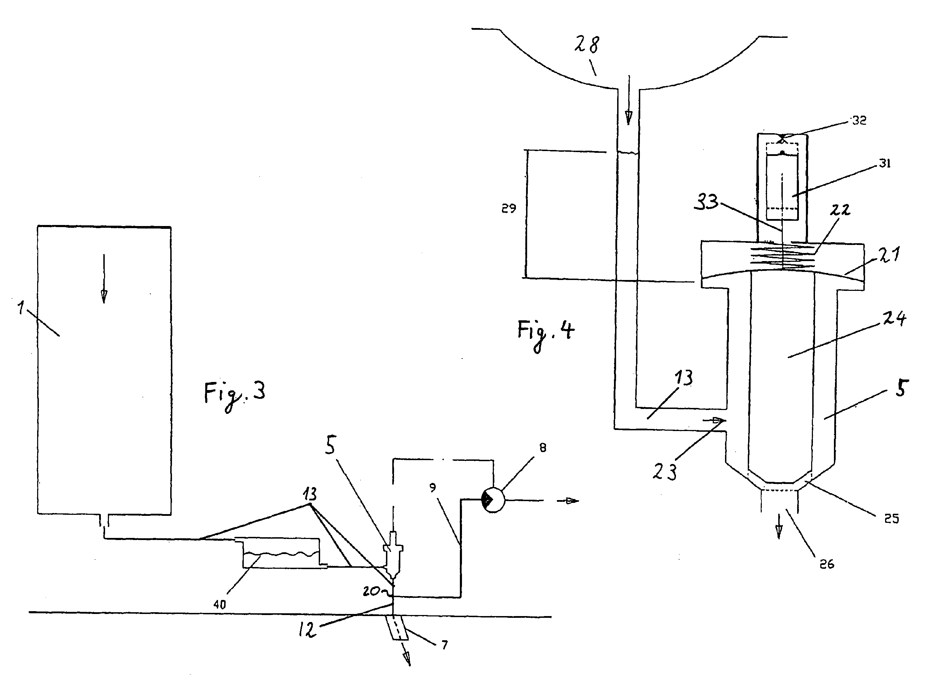

Die Vorteile des Einsatzes eines erfindungsgemäßen Ventils 5 mit Endlagenschalter 32 und Aktuator 31 in der Abwasseranlage aus Figur 1 werden anhand der Figur 3 deutlich.

In der Figur 3 ist eine erfindungsgemäße Abwasseranlage für ein Verkehrsflugzeug dargestellt, wobei aufgrund des Einsatzes eines erfindungsgemäßen Ventils 5 auf diverse Komponenten (verglichen mit Figur 1) verzichtet werden kann.

Es ist keine Kammer 2 unterhalb der Duschkabine 1 mehr notwendig, die Füllstandssensoren können entfallen und insbesondere kann auch auf die elektronische Steuerung 6 verzichtet werden. Die Einstiegshöhe der Dusche kann somit deutlich verringert werden und die Abwasseranlage kann insgesamt viel einfacher und kostengünstiger ausgelegt werden. Das Ventil 5 öffnet bei Erreichen eines bestimmten Wasserdrucks in der Abwasserleitung 13 automatisch, wobei bevorzugt ein Ausgleichsbehälter 40 in der Abwasserleitung 13 angeordnet ist, um die Schaltintervalle des Ventils 5 zu verlängern. Das selbsttätige Öffnen des Ventils 5 führt zu einer Aktivierung des Endlagenschalters 32 und dadurch zu einer Aussendung eines automatischen Steuersignals für das Gebläse 8, so dass dieses bei Bedarf automatisch in Betrieb genommen wird und das Grauwasser dadurch in das Vakuumsystem 9 des Flugzeugs eingeleitet wird. Die Aktivierung des Endlagenschalters 32 erfolgt dabei durch eine Bewegung des Kolbens 24, der durch die Bewegung beispielsweise einen elektrischen Kontakt öffnet oder schließt. Die Bewegung des Kolbens 24 kann auch über ein den Kolben 24 mit dem Endlagenschalter 32 verbindendes, beispielsweise stabförmiges Zwischenelement 33 eine Aktivierung des Endlagenschalters 32 auslösen. Durch einen Aktuator 31 kann das Ventil 5 auch ohne hydrostatischen Druck geöffnet und bevorzugt dadurch auch der Endlagenschalter 32 aktiviert werden.

An der Gabelung, bei der das Grauwasser entweder in das bordeigene Vakuumsystem 9 oder in dass Grauwasserleitungssystem 12 eingeleitet wird, ist vorzugsweise ein Wegeventil 20 angeordnet. Das Wegeventil 20 schaltet vorzugsweise im Flug in Richtung des Grauwasserleitungssystems 12 mit anschließendem Auslassstutzen 7. Am Boden ist das Wegeventil 20 bevorzugt so geschaltet, dass das Grauwasser in das bordeigene Vakuumsystem 9 eingeleitet wird.

Die Art des Steuersignals, welches vom Ventil 5 ausgesendet wird, ist nicht entscheidend, sondern der Zweck das Gebläse 8 zu starten. So kann beispielsweise das Steuersignal auch in dem Fehlen eines kontinuierlich ausgesendeten Signals liegen, wenn das Fehlen dieses Signals dazu führt, dass das Gebläse 8 in Betrieb genommen wird.

Soll das gesamte Abwassersystem des Flugzeugs drainiert werden, kann dieses z.B. mittels eines zentral ausgegebenen Signals erfolgen, welches zur Betätigung des vorzugsweise als elektrischer Antrieb ausgeführten Aktuators 31 verwendet wird, um das Ventil 5 zu öffnen.

In der Figur 4 wird das Ventil 5 zur Grauwasser-Drainage eines Waschbeckens 28 in einem Flugzeug verwendet, ein für ein Flugzeug typisches Abwassersystem. Vorzugsweise wird das Ventil 5 zur Grauwasser-Drainage einer Duschkabine 1, eines Bidets oder eines Waschbeckens 28 in einem Verkehrsflugzeug vorgesehen.

In der Abwasserleitung 13 eines Waschbeckens 28 staut sich Grauwasser so lange, bis die Grauwassersäule 29 einen hydrostatischen Druck ausübt, der über einem vorbestimmten Schwellwert liegt und der dazu führt, dass das Ventil 5 sich selbsttätig öffnet. Dieser Schwellwert ist bevorzugt so gewählt, dass das Ventil 5 öffnet, bevor das Wasser sich bis in das Waschbecken hinein zurückstaut. Die Funktionsweise des Ventils entspricht dabei der Funktionsweise des bereits beschriebenen erfindungsgemäßen Ventils 5.

Auch das Waschbecken 28 kann dadurch, dass es mit einem Ventil 5 mit einem Aktuator 31 ausgestattet ist, durch ein zentrales Signal drainiert werden und das Grauwasser muss dementsprechend nicht von Hand bei jedem einzelnen Waschbecken 28 und/oder Bidet einzeln abgelassen werden, wenn das Flugzeug für längere Zeit geparkt werden muss.

### Bezugszeichenliste:

- 1: Duschkabine
- 2: Kammer
- 3: oberer Füllstandssensor
- 4: unterer Füllstandssensor
- 5: Ventil
- 6: Steuerung
- 7: Auslassstutzen
- 8: Gebläse
- 9: Vakuumsystem
- 10: Grauwassereinlauf
- 11: Grauwasserauslass
- 12: Grauwasserleitungssystem
- 13: Abwasserleitung
- 20: Wegeventil
- 21: Membran
- 22: Federelement
- 23: Ventileingang
- 24: Kolben
- 25: Ventilsitz
- 26: Ventilausgang
- 28: Waschbecken
- 29: Grauwassersäule
- 31: Aktuator
- 32: Endlagenschalter
- 33: Zwischenelement
- 40: Ausgleichsbehälter

## Patentansprüche

1. Abwasseranlage für ein Verkehrsflugzeug mit einer Abwasserleitung (13) und einem in der Abwasserleitung (13) angeordneten Ventil (5), wobei das anfallende Grauwasser bei einer Drainage nach Durchfließen des Ventils (5) entweder zur Abgabe aus einem flugzeugrumpfseitig angebrachten Auslassstutzen (7) weitergeleitet wird oder durch ein Gebläse (8) in ein bordeigenes Vakuumsystem (9) eingeleitet wird, **dadurch gekennzeichnet, dass** das Ventil (5) einen Endlagenschalter (32) aufweist, welcher dazu vorgesehen ist, bei geöffnetem Ventil (5) ein Steuersignal für das Gebläse (8) zu senden.

2. Abwasseranlage nach Anspruch 1, **dadurch gekennzeichnet, dass** das Gebläse (8) durch das ausgesendete Steuersignal nur gestartet wird, wenn sich das Flugzeug am Boden befindet.

3. Abwasseranlage nach Anspruch 1 oder 2, **dadurch gekennzeichnet, dass** das Ventil (5) bei einem bestimmten hydrostatischen Druck selbsttätig öffnet.

4. Abwasseranlage nach einem der vorangegangenen Ansprüche, **dadurch gekennzeichnet, dass** das Ventil (5) eine Membran (21) und ein auf die Membran (21) wirkendes Federelement (22) aufweist, wobei eine Zunahme des auf das Ventil (5) wirkenden hydrostatischen Wasserdrucks über einen Schwellwert eine Verschiebung der Membran (21) entgegen der Federkraft des Federelements (22) bewirkt und das Ventil (5) öffnet.

5. Abwasseranlage nach Anspruch 4, **dadurch gekennzeichnet, dass** an der Membran (21) ein Kolben (24) angeordnet ist, der durch die Verschiebebewegung der Membran (21) aus einer das Ventil (5) verschließenden Verschlussstellung in eine das Ventil (5) freigebende Öffnungsstellung bewegbar ist.

6. Abwasseranlage nach einem der vorangegangenen Ansprüche, **dadurch gekennzeichnet, dass** das Ventil (5) einen Aktuator (31) aufweist, der zum gesteuerten Öffnen des Ventils (5) vorgesehen ist.

7. Abwasseranlage nach einem der vorangegangenen Ansprüche, **dadurch gekennzeichnet, dass** in einem Abschnitt der Abwasserleitung (13) vor dem Ventil (5) ein Ausgleichsbehälter (40) vorgesehen ist.

8. Ventil (5) zum Einsatz in einem Abwassersystem eines Verkehrsflugzeugs, wobei das Ventil (5) bei einem bestimmten hydrostatischen Druck selbsttätig öffnet, **dadurch gekennzeichnet, dass** das Ventil (5) einen Endlagenschalter (32) zur Detektion eines Öffnungszustandes des Ventils (20) aufweist.

9. Ventil (5) nach Anspruch 8, **dadurch gekennzeichnet, dass** es ein Gehäuse mit einem Ventileingang (23) und einem Ventilausgang (26) und einem in dem Gehäuse angeordneten Kolben (24) aufweist, wobei der Kolben (24) in dem Gehäuse verschiebbar angeordnet ist und mit einer Membran (21) verbunden ist, die über ein Federelement (22) mit einer Federkraft beaufschlagt ist und wobei eine Zunahme des auf das Ventil (5) wirkenden hydrostatischen Wasserdrucks über einen Schwellwert eine Verschiebung der Membran (21) entgegen der Federkraft des Federelements (22) zur Folge hat und das Ventil (5) öffnet.

10. Ventil (5) nach Anspruch 8 oder 9, **dadurch gekennzeichnet, dass** das Ventil (5) einen Aktuator (31) aufweist, der zum Öffnen des Ventils (5) vorgesehen ist.

11. Ventil (5) nach Anspruch 10, **dadurch gekennzeichnet, dass** der Aktuator (31) als elektrischer Antrieb ausgeführt ist.

12. Ventil (5) nach einem der Ansprüche 8 bis 11, **dadurch gekennzeichnet, dass** das Ventil (5) zur Grauwasser-Drainage einer Duschkabine (1), eines Bidets oder eines Waschbeckens (28) in einem Verkehrsflugzeug vorgesehen ist.

13. Verfahren zum Drainieren von Grauwasser in einer Abwasseranlage eines Verkehrsflugzeugs bei dem das anfallende Grauwasser nach Durchfließen eines Ventils (5) entweder zur Abgabe aus einem flugzeugrumpfseitig angebrachten Auslassstutzen (7) weitergeleitet wird oder durch ein Gebläse (8) in ein bordeigenes Vakuumsystem (9) eingeleitet wird, **dadurch gekennzeichnet, dass** das Gebläse (8) durch einen Endlagenschalter (32) des Ventils (5), der bei geöffnetem Ventil (5) ein Steuersignal an das Gebläse (8) sendet, automatisch gestartet wird.

14. Verfahren nach Anspruch 13, **dadurch gekennzeichnet, dass** das Gebläse (8) durch das ausgesendete Steuersignal nur gestartet wird, wenn sich das Flugzeug am Boden befindet.

15. Verfahren nach Anspruch 13 oder 14, **dadurch gekennzeichnet, dass** das Grauwasser während des Fluges automatisch durch ein bei einem bestimmten hydrostatischen Druck selbsttätig öffnendes Ventil (5) zur Abgabe aus dem flugzeugrumpfseitig angebrachten Auslassstutzen (7) weitergeleitet wird.

## Claims

1. Waste water system for an aircraft comprising a waste water pipe (13) and a valve (5) arranged in the waste water pipe (13), wherein the accumulated grey water when being drained, after flowing through the valve (5), is either conveyed to be discharged from an outlet connection (7) mounted on the aircraft fuselage side, or is conducted into an on-board vacuum system (9) by a blower (8), **characterized in that** the valve (5) comprises a limit switch (32) which is provided to send a control signal for the blower (8) when the valve (5) is open.

2. Waste water system according to claim 1, **characterized in that** the blower (8) is only activated by the emitted control signal if the aircraft is on ground.

3. Waste water system according to claim 1 or 2, **characterized in that** the valve (5) automatically opens at a predetermined hydrostatic pressure.

4. Waste water system according to any one of the preceding claims, **characterized in that** the valve (5) comprises a diaphragm (21) and a spring element (22) acting on the diaphragm (21), wherein a rise in the hydrostatic water pressure acting on the valve (5) above a threshold induces a displacement of the diaphragm (21) against the spring force of the spring element (22) and opens the valve (5).

5. Waste water system according to claim 4, **characterized in that** a piston (24) is located on the diaphragm (21), which piston can be moved from a closed position closing the valve (5) to an open position opening the valve (5) by the displacing movement of the diaphragm (21).

6. Waste water system according to any one of the preceding claims, **characterized in that** the valve (5) comprises an actuator (31) which is provided to open the valve (5) in a controlled manner.

7. Waste water system according to any one of the preceding claims, **characterized in that** a compensation tank (40) is provided in a section of the waste water pipe (13) in front of the valve (5).

8. Valve (5) for being used in a waste water system of an aircraft, wherein the valve (5) automatically opens at a predetermined hydrostatic pressure, **characterized in that** the valve (5) comprises a limit switch (32) for detecting an open state of the valve (20).

9. Valve (5) according to claim 8, **characterized in that** it comprises a housing with a valve inlet (23) and a valve outlet (26) and a piston (24) located in the housing, wherein the piston (24) is displaceably mounted in the housing and is connected to a diaphragm (21) which is loaded with a spring force via a spring element (22), and wherein a rise in the hydrostatic water pressure acting on the valve (5) above a threshold results in a displacement of the diaphragm (21) against the spring force of the spring element (22) and opens the valve (5).

10. Valve (5) according to claim 8 or 9, **characterized in that** the valve (5) comprises an actuator (31) which is provided to open the valve (5).

11. Valve (5) according to claim 10, **characterized in that** the actuator (31) is an electric drive.

12. Valve (5) according to one of the claims 8 to 11, **characterized in that** the valve (5) is provided to drain the grey water of a shower cabin (1), a bidet or a basin (28) in an aircraft.

13. Method for draining the grey water in a waste water system of an aircraft, in which the accumulated grey water after flowing through a valve (5) is either conveyed to be discharged from an outlet connection (7) mounted on the aircraft fuselage side, or is conducted into an on-board vacuum system (9) by a blower (8), **characterized in that** the blower (8) is automatically activated by a limit switch (32) of the valve (5) sending a control signal to the blower (8) when the valve (5) is open.

14. Method according to claim 13, **characterized in that** the blower (8) is only activated by the emitted control signal if the aircraft is on ground.

15. Method according to claim 13 or 14, **characterized in that** the grey water during the flight is automatically conveyed to be discharged from an outlet connection (7) mounted on the aircraft fuselage side by a valve (5) which automatically opens at a predetermined hydrostatic pressure.

## Revendications

1. Installation d'évacuation pour un avion de ligne comportant une canalisation d'évacuation (13) et une soupape (5) disposée dans la canalisation d'évacuation (13), dans laquelle les eaux grises générées au cours d'un drainage sont, après avoir traversé la soupape (5), soit acheminées pour être évacuées depuis un raccord de sortie (7) appliqué côté fuselage, soit introduites dans un système sous vide embarqué (9) par l'intermédiaire d'un ventilateur (8), **caractérisée en ce que** la soupape (5) présente un commutateur de fin de course (32) qui est prévu pour envoyer un signal de commande au ventilateur (8) lorsque la soupape (5) est ouverte.

2. Installation d'évacuation selon la revendication 1, **caractérisée en ce que** le ventilateur (8) n'est démarré par le signal de commande émis que lorsque l'avion se trouve au sol.

3. Installation d'évacuation selon la revendication 1 ou 2, **caractérisée en ce que** la soupape (5) s'ouvre automatiquement à une pression hydrostatique déterminée.

4. Installation d'évacuation selon une des revendications précédentes, **caractérisée en ce que** la soupape (5) présente une membrane (21) et un élément ressort (22) agissant sur la membrane (21), une augmentation au-dessus d'une valeur seuil de la pression d'eau hydrostatique qui agit sur la soupape (5) entraînant un déplacement de la membrane (21) contre la force élastique de l'élément ressort (22) et ouvrant la soupape (5).

5. Installation d'évacuation selon la revendication 4, **caractérisée en ce que**, sur la membrane (21), un piston (24) est disposé et est mobile, par le mouvement de déplacement de la membrane (21), depuis une position de fermeture fermant la soupape (5) jusque dans une position d'ouverture libérant la soupape (5).

6. Installation d'évacuation selon une des revendications précédentes, **caractérisée en ce que** la soupape (5) présente un actionneur (31) qui est prévu pour ouvrir de manière commandée la soupape (5).

7. Installation d'évacuation selon une des revendications précédentes, **caractérisée en ce que**, dans une partie de la canalisation d'évacuation (13) en amont de la soupape (5), un réservoir d'expansion (40) est prévu.

8. Soupape (5) destinée à une utilisation dans un système d'évacuation d'un avion de ligne, la soupape (5) s'ouvrant automatiquement à une pression hydrostatique déterminée, **caractérisée en ce que** la soupape (5) présente un commutateur de fin de course (32) destiné à détecter un état d'ouverture de la soupape (20).

9. Soupape (5) selon la revendication 8, **caractérisée en ce qu'**elle présente un boîtier comportant une entrée de soupape (23) et une sortie de soupape (26) ainsi qu'un piston (24) disposé dans le boîtier, le piston (24) étant disposé mobile dans le boîtier et relié à une membrane (21) qui est sollicitée par une force élastique par le biais d'un élément ressort (22) et une augmentation au-dessus d'une valeur seuil de la pression d'eau hydrostatique qui agit sur la soupape (5) entraînant un déplacement de la membrane (21) contre la force élastique de l'élément ressort (22) et ouvrant la soupape (5).

10. Soupape (5) selon la revendication 8 ou 9, **caractérisée en ce que** la soupape (5) présente un actionneur (31) qui est prévu pour ouvrir la soupape (5).

11. Soupape (5) selon la revendication 10, **caractérisée en ce que** l'actionneur (31) est réalisé sous la forme d'un entraînement électrique.

12. Soupape (5) selon une des revendications 8 à 11, **caractérisée en ce que** la soupape (5) est prévue pour drainer les eaux grises d'une cabine de douche (1), d'un bidet ou d'un lavabo (28) dans un avion de ligne.

13. Procédé de drainage d'eaux grises dans une installation d'évacuation d'un avion de ligne, dans lequel les eaux grises générées sont, après avoir traversé une soupape (5), soit acheminées pour être évacuées depuis un raccord de sortie (7) appliqué côté fuselage, soit introduites dans un système sous vide embarqué (9) par l'intermédiaire d'un ventilateur (8), **caractérisé en ce que** le ventilateur (8) est démarré automatiquement par un commutateur de fin de course (32) de la soupape (5), qui envoie un signal de commande au ventilateur (8) lorsque la soupape (5) est ouverte.

14. Procédé selon la revendication 13, **caractérisé en ce que** le ventilateur (8) n'est démarré par le signal de commande émis que lorsque l'avion se trouve au sol.

15. Procédé selon la revendication 13 ou 14, **caractérisé en ce que** les eaux grises sont acheminées automatiquement pendant le vol à travers une soupape (5) s'ouvrant automatiquement à une pression hydrostatique déterminée pour être évacuées depuis un raccord de sortie (7) appliqué côté fuselage.
